# FASCICULE DE BREVET EUROPEEN

(11) **EP 1 295 171 B1**
(45) Date de publication et mention de la délivrance du brevet: **31.08.2005**
(21) Numéro de dépôt: 01945452.9
(22) Date de dépôt: 15.06.2001
(51) Int. Cl.: G03B 27/72, G03B 27/54

(54) **PROCEDE ET DISPOSITIF DE PROJECTION D'IMAGES NUMERIQUES SUR UN SUPPORT PHOTOSENSIBLE**
VERFAHREN UND GERÄT ZUR PROJEKTION DIGITALER BILDER AUF FOTOEMPFINDLICHES MATERIAL
METHOD AND DEVICE FOR DIGITAL IMAGE PROJECTION ON PHOTOSENSITIVE SUPPORT

(30) Priorité: 16.06.2000 FR 0007681
(43) Date de publication de la demande: 26.03.2003
(73) Titulaire: Identis SA, 77183 Croissy Beaubourg (FR)
(72) Inventeur: ROUSSEL, Alain, 77410 Claye-Souilly (FR)
(74) Mandataire: Thévenet, Jean-Bruno
(86) Numéro de dépôt international: PCT/FR2001/001872
(87) Numéro de publication internationale: WO 2001/096942

(56) Documents cités:
- WO-A-00/26721
- US-A- 5 023 652
- US-A- 5 884 991

## Description

La présente invention a pour objet un procédé et un dispositif de projection d'images numériques sur un support photosensible.

On connaît actuellement divers dispositifs d'affichage d'informations numériques tels que des tubes à rayons cathodiques (CRT), des écrans à cristaux liquides (LCD), ou encore des dispositifs d'affichage à micro-miroirs (DMD) intégrés dans des projecteurs.

La prise de vue photographique d'images affichées sur de tels dispositifs pose toutefois un certain nombre de problèmes pratiques, et ne permet pas d'obtenir sur un support photosensible des images d'excellente qualité.

Les images numérisées sont ainsi généralement reportées sur des supports en papier à l'aide d'imprimantes spécialisées, telles que des imprimantes laser ou des imprimantes à jet d'encre.

Or, il existe un certain nombre de cas où il est souhaitable de reporter directement sur un support photosensible, tel qu'un film photographique négatif, des images numérisées de haute qualité, afin de permettre ensuite un traitement de ces images par les procédés photographiques traditionnels qui possèdent notamment l'avantage de conserver une excellente définition.

Le document de brevet US 5 859 689 décrit un système d'impression d'image permettant de reporter sur un même type de matériau photosensible d'une part des informations d'image obtenues à partir d'un film négatif et d'autre part des informations d'image obtenues à partir d'un film positif. Pour l'impression à partir d'un film positif, l'image à imprimer est d'abord mémorisée. Un faisceau de fibres optiques est interposé entre une source de lumière chaude délocalisée associée à un obturateur et une tête mobile d'affichage d'images numériques composée d'un ensemble d'éléments PLZT associés à des électrodes reliées à un circuit de commande pour effectuer une impression ligne par ligne d'une image numérisée, le support d'impression étant déplacé après chaque impression de ligne.

La présente invention vise à remédier aux inconvénients précités et à permettre le report d'images numériques sur un support photosensible d'une manière simple, souple et efficace qui permette d'obtenir une excellente qualité pour les images reportées sur le support photosensible tel qu'un film photographique négatif, un film de diapositives ou un papier photosensible positif.

Grâce à l'absence d'intégration d'une source de lumière au voisinage immédiat du dispositif d'affichage d'images numériques, il est possible de mettre en oeuvre une source lumineuse indépendante maintenue constamment sous tension pendant l'utilisation, et bien refroidie avec une lumière de qualité constante, tout en bénéficiant au niveau du support photosensible d'une luminosité facilement réglable de manière à être compatible avec la sensibilité de ce support photosensible et permettre des temps d'exposition relativement longs.

L'invention permet encore de s'affranchir des phénomènes rémanents qui se produisent sur les dispositifs d'affichage numérique à source de lumière incorporée, dès lors que selon l'invention l'image numérisée est affichée d'une manière indépendante de son éclairage.

L'invention concerne également un dispositif de projection d'images numériques sur un support photosensible selon la rev. 1.

Les moyens d'application de lumière froide comprennent un faisceau de fibres optiques.

Avantageusement, le dispositif d'affichage d'images numériques présente des dimensions plus grandes que le support photosensible et un dispositif optique réducteur est interposé entre le dispositif d'affichage d'images numériques et le poste d'impression dans lequel est positionné le support photosensible.

De façon plus particulière, la source de lumière chaude comprend un bloc d'alimentation électrique, une lampe à rayonnement thermique, un ventilateur de refroidissement et un bloc de support de filtres de taille réduite disposé au voisinage du dispositif de raccordement des moyens d'application de lumière froide.

Le dispositif d'affichage d'images numériques est un écran à cristaux liquides.

Le faisceau de fibres optiques se termine du côté opposé à la source de lumière par une dalle de fibres optiques superposée à l'écran à cristaux liquides.

Selon le mode de réalisation, la dalle de fibres optiques comprend une pluralité de fibres optiques qui sont étalées dans un plan les unes parallèlement aux autres en présentant des extrémités libres obturées et une portion de leur couche extérieure épluchée de manière à permettre l'émission de lumière à travers cette portion de couche extérieure épluchée.

Selon un autre mode de réalisation de l'invention, le dispositif d'affichage d'images numériques est un dispositif d'affichage numérique à micro-miroirs.

Selon une caractéristique particulière, le poste d'impression comprend un verre sans reflet contre lequel un support photosensible peut être pressé par un presseur commandé par le dispositif de commande électronique.

D'autres caractéristiques et avantages de l'invention ressortiront de la description suivante de modes particuliers de réalisation, donnés à titre d'exemples, en référence aux dessins annexés, sur lesquels :
- la figure 1 est une vue schématique de l'ensemble d'un dispositif de projection d'images numériques sur un support photosensible selon un premier mode de réalisation de l'invention,
- la figure 2 est une vue d'un écran d'affichage du dispositif de la figure 1,
- la figure 3 est une vue d'un support photosensible placé dans le dispositif de la figure 1,
- la figure 4 est une vue d'un ensemble de source de lumière utilisable dans le dispositif de la figure 1,
- la figure 5 est une vue schématique en perspective avec arrachement montrant un exemple de réalisation d'un écran à cristaux liquides,
- la figure 6 est une vue en coupe selon la ligne VI-VI de la figure 7, montrant une dalle de fibres optiques utilisable dans le dispositif de la figure 1,
- la figure 7 est une vue de dessous d'une dalle de fibres optiques utilisable dans le dispositif de la figure 1,
- la figure 8 est une vue agrandie d'une fibre optique intégrée dans la dalle de fibres optiques des figures 6 et 7,
- la figure 9 est une vue schématique de l'ensemble d'un dispositif de projection d'images numériques sur un support photosensible, selon un deuxième mode de réalisation pas partie de l'invention,
- la figure 10 est une vue de face d'une partie du dispositif d'affichage d'images numériques incorporé dans le dispositif de la figure 9 et,
- la figure 11 est une vue schématique en perspective éclatée d'un exemple de micro-miroir incorporable dans le dispositif d'affichage d'images numériques incorporé dans le dispositif de la figure 9.

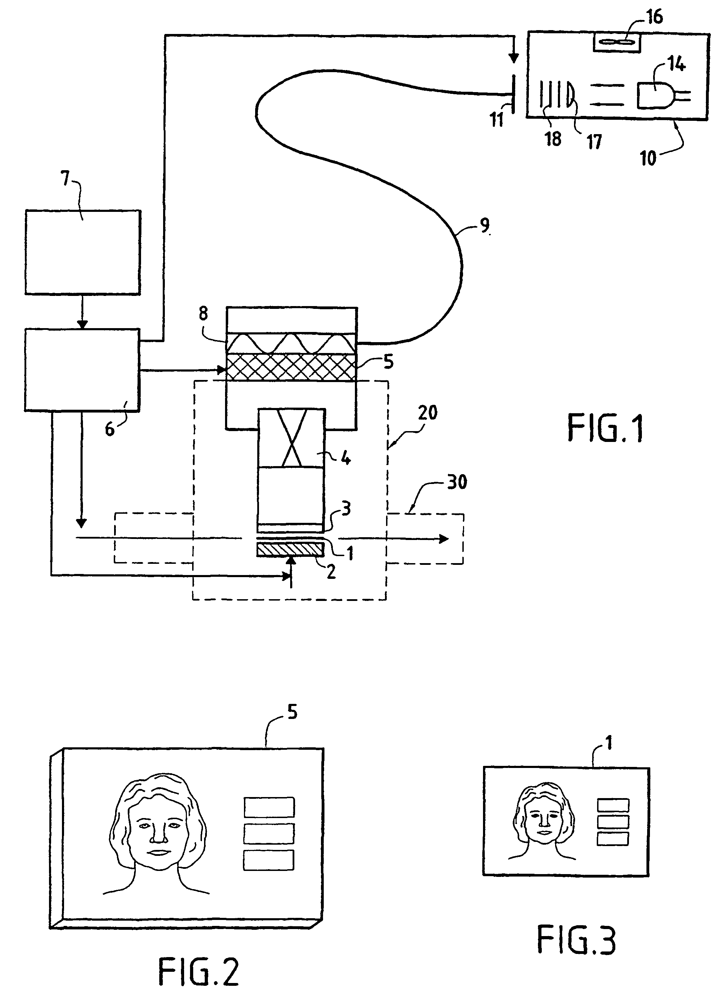

On se reportera d'abord à la figure 1 qui montre un dispositif conforme à un premier mode de réalisation de l'invention, et permettant de reporter sur un support photosensible 1, tel qu'un film photographique négatif ou inversible, ou un papier photographique, une image obtenue par numérisation à partir d'informations stockées dans un support d'informations numériques 7, tel qu'une mémoire pouvant être par exemple de type magnétique, optique ou à semi-conducteur.

Le support photosensible 1 circulant dans un espace 30 étanche à la lumière ambiante, est introduit dans un poste d'impression placé également dans une enceinte 20 étanche à la lumière ambiante.

Le poste d'impression comprend essentiellement une plaque de verre sans reflet 3 contre laquelle le support photosensible 1 peut être plaqué par un presseur 2 commandé par un dispositif centralisé de commande électronique 6.

Un dispositif optique réducteur 4 est disposé au-dessus de la plaque de verre sans reflet 3, à distance de celle-ci, pour projeter à travers cette plaque sur le support photosensible 1 une image affichée sur un dispositif d'affichage numérique 5 disposé au-dessus du dispositif optique réducteur 4.

Dans la description en référence à la figure 1, il est évoqué un dispositif disposé verticalement, mais le même assemblage d'éléments pourrait être également placé de façon horizontale, de sorte que les termes "au-dessus" ou "au-dessous" ne doivent pas être interprétés de façon limitative, mais pourraient également signifier "d'un côté" ou "de l'autre côté".

Dans l'exemple de la figure 1, le dispositif d'affichage numérique 5 est constitué par un écran à cristaux liquides (écran LCD).

Un tel écran LCD peut être par exemple du type à matrice active à transistors à couche mince (TFT). L'écran LCD présente de préférence une surface largement plus importante que celle du support photosensible 1, de telle manière que l'objectif 4 présente un rapport de réduction important.

A titre d'exemple, le support photosensible 1 peut être un film négatif de format 24 x 36mm ou 60 x 60mm tandis que l'écran LCD présente une diagonale de 38cm (15"). La résolution de l'écran LCD 5 peut être par exemple de 640 points horizontaux et 480 points verticaux. Dans ce cas, pour une image reproduite de l'ordre de 30 x 40mm, la définition peut être de 16 points au millimètre. Un écran LCD présentant les mêmes dimensions, mais une résolution plus importante de par exemple 1024 x 768 points conduit à une définition d'image reproduite de 25,6 points au millimètre, ce qui correspond à une image d'excellente qualité.

L'écran à cristaux liquides 5 utilisé dans le cadre de l'invention peut être obtenu à partir de matériels standard, mais il doit être dépourvu de toute source de lumière intégrée. En effet, les écrans à cristaux liquides sont couramment utilisés avec l'intégration de leur propre source de lumière. De tels écrans à cristaux liquides classiques ne permettent pas une prise de vue photographique de qualité car ils ne permettent pas des temps d'exposition adaptés, et les phénomènes rémanents, inhérents aux successions de mises sous tension et de coupures de tension se produisant lors de l'apparition d'une image produisent également une instabilité empêchant une prise de vue photographique de qualité.

Un écran à cristaux liquides utilisable dans le cadre de la présente invention doit donc être dépourvu de source de lumière intégrée telle qu'une source de lumière fluorescente et, comme représenté sur la figure 1, doit être placé immédiatement sous un dispositif tel qu'une dalle 8 de fibres optiques, capable d'éclairer sélectivement d'écran 5 en lumière froide, à partir d'une source lumineuse 10 délocalisée qui sera décrite plus loin.

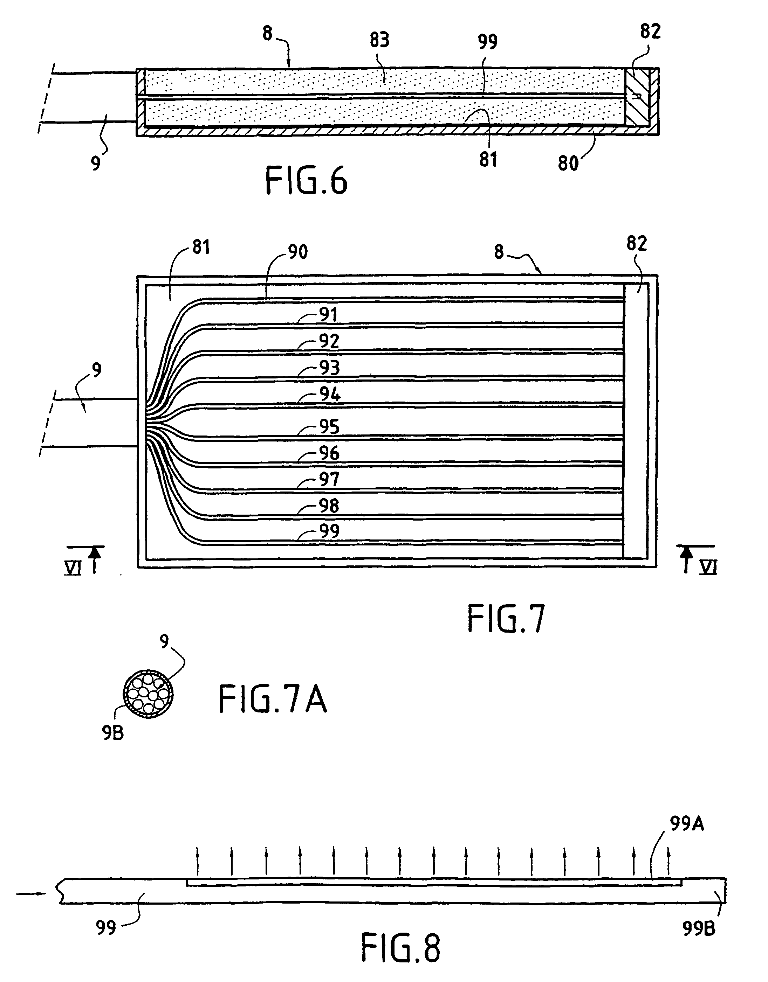

La structure même de l'écran LCD peut être classique, comme illustré sur la figure 5. Un diffuseur 101 reçoit de la lumière 113 et répartit celle-ci sur un premier polariseur 102 suivi d'une première plaque de verre 103 recouvrant un ensemble d'éléments actifs définissant une matrice avec des électrodes d'affichage transparentes 108 coopérant avec des lignes de données 104 (colonnes), des lignes de porte 105 (rangées), des transistors à couche mince (TFT) 106 et des condensateurs de stockage 107. La structure en forme de sandwich d'un écran LCD à matrice active comprend en outre une électrode commune transparente 109, une couche formant filtre de couleur 110, une deuxième plaque de verre 111 et un deuxième polariseur 112. Les cristaux liquides emprisonnés entre les deux plaques de verre 103, 111 recouverts sur leurs faces externes par les polariseurs 102, 112 servent d'interrupteurs permettant à la lumière 113 de passer ou non à travers les deux polariseurs 102, 112 en fonction de l'orientation des cristaux liquides elle-même déterminée par le champ électrique créé par les électrodes transparentes de commande 108, 109. Les transistors à couche mince 106 associés aux lignes de rangée et de colonne 105, 104 permettent d'exciter sélectivement chaque pixel d'une matrice à cristaux liquides, en fonction des informations numériques reçues d'un dispositif de commande 6.

Les informations numériques appliquées à l'écran 5 permettent de définir une image ou un ensemble de caractères ou symboles (figure 2), cette image ou cet ensemble de caractères ou symboles étant reportés sur un support photosensible 1 (figure 3) pendant le temps d'exposition qui est défini par un obturateur 11 disposé à la sortie de la source de lumière délocalisée 10.

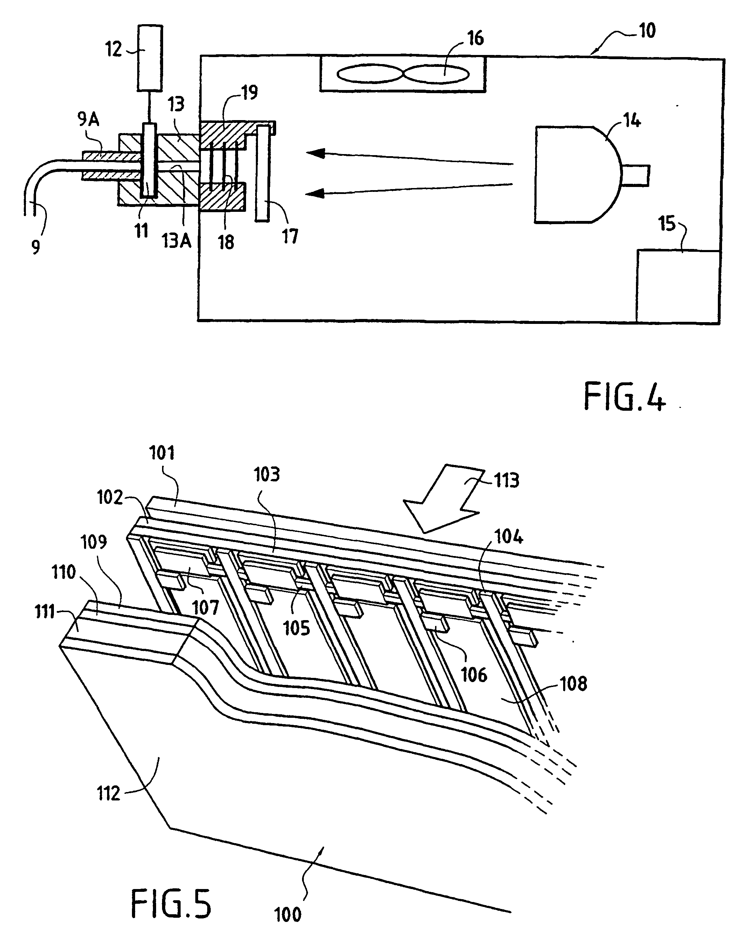

La figure 4 montre plus en détail un exemple de source lumineuse 10 à rayonnement thermique qui est délocalisée par rapport à l'écran à cristaux liquides 5 et au poste d'impression 2, 3. La source lumineuse 10 comprend un bloc d'alimentation électrique 15, et une lampe 14 pouvant être d'assez forte puissance (par exemple 100 à 150 W) et pouvant être facilement remplacée ou changée en fonction par exemple de la température de couleur souhaitée. Pendant l'utilisation, la lampe 14 est maintenue constamment sous tension de façon à produire une lumière de qualité constante. Le refroidissement de la source de lumière 10 est assuré par un ventilateur 16 et par des ouïes ménagées dans le boîtier de la source de lumière 10. De plus, du fait que la source de lumière est délocalisée par rapport à l'écran 5, elle peut présenter des dimensions suffisantes pour assurer une bonne évacuation de la chaleur. Le faisceau lumineux de lumière blanche issu de la lampe 14 est orienté vers un bloc 19 de support de filtres 18 et comportant une plaque de verre 17 formant lentille pour répartir la lumière sur les filtres 18 et un canal 13A ménagé dans un bloc de sortie 13 équipé d'un obturateur 11 commandé par un électro-aimant 12 recevant lui-même des ordres du bloc de commande 6. Le bloc de sortie 13 permet le raccordement par un embout 9A, d'un faisceau de fibres optiques 9 qui servent à transmettre la lumière filtrée issue de la source de lumière délocalisée 10 vers la dalle de fibres 8 servant à éclairer l'écran LCD 5.

Le mécanisme d'obturation 11 peut être de taille réduite puisqu'il agit simplement sur le diamètre du conduit lumineux 13A en lumière froide qui, comme le faisceau de fibres optiques peut présenter une faible dimension, par exemple de l'ordre de 5mm. Les filtres 18 éventuellement nécessaires pour adapter la lumière de la lampe 14 aux caractéristiques des fibres optiques, peuvent également être de petite taille puisqu'ils sont placés juste devant le conduit lumineux 13A.

Grâce à l'utilisation des fibres optiques 9, il est possible d'alimenter en lumière froide la dalle de fibres 8 et donc l'écran LCD 5 avec une luminosité nettement inférieure à celle produite habituellement par les sources de lumière intégrées. Il est ainsi possible d'obtenir des temps de pose relativement longs, de l'ordre de un dixième de seconde à quelques dixièmes de seconde, voire à plusieurs secondes, de telle sorte que les réglages de la prise de vue peuvent être paramétrés d'une manière qui optimise la qualité de la prise de vue.

On décrira maintenant en référence aux figures 6 à 8 un exemple de dalle de fibres 8 pouvant être superposée à l'écran à cristaux liquides 5 afin d'éclairer sélectivement celui-ci lorsque l'obturateur 11 est ouvert.

Les fibres optiques 90 à 99 du faisceau 9 sont ôtées de leur gaine protectrice commune 9B et sont étalées dans leur partie terminale de façon à être réparties parallèlement les unes aux autres sur une surface équivalente à celle de l'écran LCD 5.

Le nombre de fibres optiques du faisceau 9 est adapté à la taille de la dalle 8, et donc à la taille de l'écran LCD 5. Plus la dalle 8 est grande, plus il y a lieu d'augmenter le nombre de fibres constituant le faisceau 9.

Dans le cas d'un écran de diagonale 38cm (15"), un ensemble de dix fibres 90 à 99 d'un diamètre de 1 mm écartées les unes des autres suffisent à produire un éclairement de l'ensemble de l'écran LCD 5. Les fibres optiques 90 à 99 sont noyées dans une résine 83 remplissant un boîtier 80 dont le fond est recouvert d'un revêtement réfléchissant 81, constitué par exemple par une feuille d'aluminium. Le boîtier 80 comprend une partie terminale 82 qui obture les extrémités libres des fibres 90 à 99.

Comme on l'a représenté sur la figure 8, chaque fibre 90 à 99 comprend au niveau de la dalle 8, une zone épluchée 99A dans laquelle le revêtement extérieur de la fibre telle que 99 a été enlevé de manière à permettre une diffusion de la lumière le long de génératrices de la fibre telle que 99 à travers la portion de couche extérieure épluchée. La portion de couche extérieure épluchée telle que 99A de chaque fibre 90 à 99 est située du côté ouvert du boîtier 80 qui est opposé au matériau réfléchissant 81.

A titre de variante, les fibres optiques 90 à 99 pourraient également être disposées côte à côte de façon jointives au niveau de la dalle de fibres 8.

L'utilisation d'une source lumineuse 10 délocalisée associée à des fibres optiques 9 permet d'une part d'éloigner la source de chaleur constituée par la lampe 14 par rapport à l'ensemble de prise de vue photographique (écran 5, objectif réducteur 4, plaque de verre 3 recevant un support photosensible 1) et d'autre part de garantir une absence absolue de lumière au niveau de l'écran LCD 5 lorsque l'obturateur 11 est fermé. Il n'existe ainsi pas de risque de surexposition du support photosensible 1 susceptible d'être provoquée par des effets de rémanence ou par de la chaleur transmise par la source de lumière.

Selon une caractéristique importante du procédé selon la présente invention, on procède de façon indépendante à la mise en place du support photosensible 1 dans le poste d'impression 2, 3, à l'affichage d'une image sur l'écran LCD 5 à partir d'informations numériques stockées dans la mémoire 7, et à l'ouverture de l'obturateur 11.

Ainsi, l'unité centrale de commande 6 commande la mise en place d'un support photosensible 1 dans le poste d'impression et la fermeture du presseur 2, ainsi que l'affichage sur l'écran LCD d'une image stockée de façon numérique et devant être reportée sur le support photosensible 1, pendant que l'obturateur 11 est maintenu fermé, la source de lumière 10 étant elle-même déjà en service de façon stabilisée. L'unité centrale de commande 6 commande ensuite seulement l'ouverture de l'obturateur 11 pendant une durée correspondant au temps d'exposition souhaité. Après refermeture de l'obturateur 11, l'unité centrale de commande 6 commande l'évacuation du support photosensible dans le tunnel ou l'enceinte étanche 30 pour être développé dans un autre poste de travail, et un nouveau cycle peut commencer avec l'approvisionnement du poste de travail 2, 3 avec un nouveau support photosensible 1.

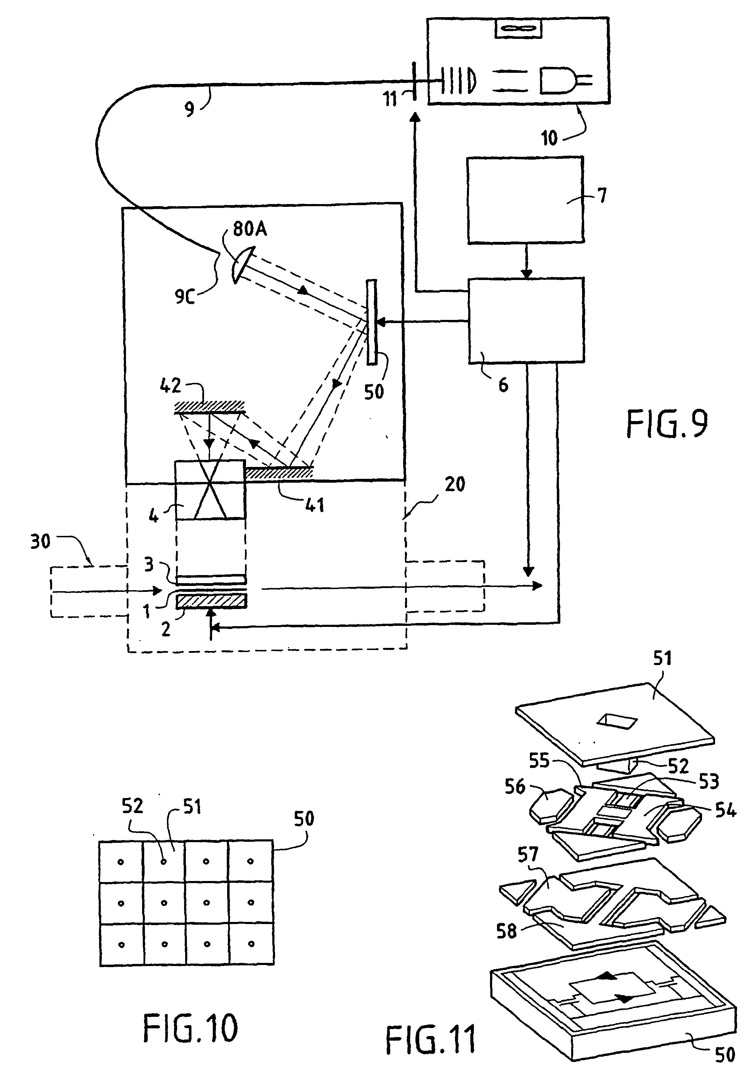

On décrira maintenant en référence aux figures 9 à 11 un autre exemple de réalisation du dispositif de projection d'images numériques sur un support photosensible, pas partie de l'invention.

Sur la figure 9 les éléments semblables à ceux déjà décrits en référence à la figure 1 portent les mêmes numéros de référence et ne seront pas décrits à nouveau. En particulier, la source de lumière 10 peut être strictement identique à celle décrite en référence à la figure 4 et le poste d'impression 2, 3 peut également être identique à celui décrit en référence à la figure 1.

Dans le cas de la figure 9, il n'est toutefois pas nécessaire d'utiliser une dalle de fibres et le faisceau de fibres optiques 9 peut simplement éclairer en lumière froide par son extrémité libre 9C une lentille 80A qui éclaire un dispositif 50 d'affichage d'images numériques constitué par un dispositif d'affichage numérique à micro-miroirs. L'image formée sur le dispositif d'affichage à micro-miroirs (DMD) 50 est renvoyée par des miroirs 41, 42 vers l'objectif réducteur 4 qui projette l'image sur le support photosensible 1 lorsque l'obturateur 11 est ouvert et permet l'éclairement du dispositif d'affichage 50.

Le dispositif d'affichage numérique à miroirs 50 est de type connu avec un ensemble matriciel constitué de micro-miroirs 51 montés pivotants autour de supports 51 et pouvant être inclinés d'un côté ou de l'autre de ± 10°, les deux positions d'inclinaison possibles correspondant aux informations binaires 0 et 1 (figure 10).

Un dispositif d'affichage à micro-miroirs permet d'obtenir une définition de par exemple 1024 points horizontaux x 768 points verticaux, soit pour une image reproduite sur un support photosensible de l'ordre de 3 x 4 cm, une définition d'image reproduite de 25,6 points au millimètre, ce qui correspond à une excellente qualité d'image.

La figure 11 montre un exemple de micro-miroir 51 muni de son pivot 52 monté sur un support 54 muni d'une articulation en torsion 53 avec des électrodes 56 d'adresse de miroir. Le support 54 peut se terminer par des pointes 55 formant ressort. Sur la figure 11, on voit encore des électrodes 57 d'adresse de support, un bus 58 de polarisation-réinitialisation et un support 59 de mémoire CMOS.

Le dispositif 50 d'affichage à micro-miroirs est ainsi constitué par un réseau de micro-miroirs en aluminium fabriqués de façon monolithique sur un réseau de cellules de mémoire de type SRAM. La rotation des micro-miroirs résulte de l'attraction électrostatique entre la structure du miroir et la cellule de mémoire placée sous le miroir. Chaque micro-miroir pouvant être adressé et commandé individuellement, il est possible d'afficher une image numérique dont la définition dépend simplement du nombre de micro-miroirs composant le dispositif 50.

Comme dans le cas du premier mode de réalisation, conformément à l'invention, la commande de l'affichage d'une image numérique sur le dispositif 50 est effectuée par l'unité centrale de commande 6 dans une première étape tandis que la commande de l'obturateur 11 et donc du temps d'exposition du support photosensible 1 est effectuée dans un deuxième temps lorsque l'image à reproduire est disponible sur le dispositif 50 et que le support photosensible 1 est bien en place entre le presseur 2 et la plaque de verre 3.

## Revendications

1. Dispositif de projection d'images numériques sur un support photosensible, comprenant :
- un dispositif (5) d'affichage d'images numériques dépourvu de source de lumière intégrée,
- un poste d'impression (2, 3) disposé à distance dans une position relative définie par rapport au dispositif (5) d'affichage d'images numériques,
- une source (10) de lumière chaude délocalisée,
- des moyens (9) d'application de lumière froide comprenant un faisceau de fibres optiques (9) et interposés entre la source (10) de lumière chaude et le dispositif (5) d'affichage d'images numériques,
- un obturateur (11) interposé entre la source (10) de lumière chaude et les moyens (9) d'application de lumière froide, et
- un dispositif électronique (6) de commande pour commander le positionnement d'un support photosensible (1) dans le poste d'impression (2, 3), l'affichage d'une image numérique sur le dispositif (5) d'affichage d'images numériques, et l'ouverture sélective de l'obturateur (11),
**caractérisé en ce que** le dispositif (5) d'affichage d'images numériques est un écran à cristaux liquides, **en ce que** le faisceau (9) de fibres optiques se termine du côté opposé à la source de lumière (10) par une dalle (8) de fibres optiques superposée à l'écran à cristaux liquides (5) et **en ce que** la dalle (8) de fibres optiques comprend une pluralité de fibres optiques (90 à 99) qui sont étalées dans un plan les unes parallèlement aux autres en présentant des extrémités libres obturées et une portion de leur couche extérieure épluchée de manière à permettre l'émission de lumière à travers cette portion de couche extérieure épluchée.

2. Dispositif selon la revendication 1, **caractérisé en ce que** la dalle (8) de fibres optiques comprend un boîtier (80) dont le fond est revêtu d'un matériau réfléchissant (81) et à l'intérieur duquel les fibres optiques (90 à 99) étalées dans un plan sont noyées dans un matériau translucide (83) en présentant une portion de couche extérieure épluchée du côté ouvert du boîtier (80) opposé au matériau réfléchissant (81).

3. Dispositif selon la revendication 1 ou la revendication 2, **caractérisé en ce que** le dispositif (5 ; 50) d'affichage d'images numériques présente des dimensions plus grandes que le support photosensible (1) et **en ce qu'**un dispositif optique réducteur (4) est interposé entre le dispositif (5 ; 50) d'affichage d'images numériques et le poste d'impression (2, 3) dans lequel est positionné le support photosensible (1).

4. Dispositif selon l'une quelconque des revendications 1 à 3, **caractérisé en ce que** la source (10) de lumière chaude comprend un bloc (15) d'alimentation électrique, une lampe (14) à rayonnement thermique, un ventilateur de refroidissement (16) et un bloc (19) de support de filtres (18) de taille réduite disposé au voisinage du dispositif (13) de raccordement des moyens (9) d'application de lumière froide.

5. Dispositif selon l'une quelconque des revendications 1 à 4, **caractérisé en ce que** le poste d'impression comprend un verre sans reflet (3) contre lequel un support photosensible (1) peut être pressé par un presseur (2) commandé par le dispositif de commande électronique (6).

6. Dispositif selon l'une quelconque des revendications 1 à 5, **caractérisé en ce que** le dispositif électronique (6) de commande est adapté pour commander l'ouverture sélective de l'obturateur (11) interposé entre la source (10) de lumière chaude délocalisée et les moyens (9) d'application de lumière froide interposés entre l'obturateur (11) et le dispositif (5) d'affichage d'images numériques, avec une durée d'ouverture comprise entre environ un dixième de seconde et une dizaine de secondes.

7. Dispositif selon l'une quelconque des revendications 1 à 6, **caractérisé en ce qu'**il est appliqué au report d'images numériques, stockées dans des bases de données, sur des supports photosensibles négatifs ou positifs dans le cadre de la fabrication de coupons d'identification.

## Patentansprüche

1. Vorrichtung zur Projektion von digitalen Bildern auf einen lichtempfindlichen Träger, umfassend:
- eine Vorrichtung (5) zum Anzeigen von digitalen Bildern, die keine integrierte Lichtquelle aufweist,
- eine Druckstation (2, 3), die in Entfernung in einer relativen Position angeordnet ist, die in Bezug auf die Vorrichtung (5) zum Anzeigen von digitalen Bildern definiert ist,
- eine warme, verlagerte Lichtquelle (10),
- Mittel (9) zum Anwenden von kaltem Licht, umfassend ein Bündel Glasfasern (9) und zwischen der warmen Lichtquelle (10) und der Vorrichtung (5) zum Anzeigen von digitalen Bildern angeordnet,
- einen Verschluß (11), der zwischen der warmen Lichtquelle (10) und den Mitteln (9) zum Anwenden von kaltem Licht angeordnet ist, und
- eine elektronische Steuervorrichtung (6), um die Positionierung eines lichtempfindlichen Trägers (1) in der Druckstation (2, 3) zu steuern, die Anzeige eines digitalen Bildes auf der Vorrichtung (5) zum Anzeigen von digitalen Bildern und das wahlweise Öffnen des Verschlusses (11),
**dadurch gekennzeichnet,**
**daß** die Vorrichtung (5) zum Anzeigen von digitalen Bildern ein Flüssigkristallbildschirm ist,
**daß** das Bündel (9) Glasfasern auf der Seite, die der Lichtquelle (10) gegenüberliegt, in einer Platte (8) aus Glasfasern endet, die über den Flüssigkristallbildschirm (5) gelegt sind und
**daß** die Platte (8) aus Glasfasern eine Mehrzahl an Glasfasern (90 bis 99) umfaßt, die in einer Ebene parallel zueinander ausgebreitet sind, wobei sie freie verschlossene Enden aufweisen und ein Abschnitt ihrer Außenschicht geschält ist, so daß das Ausstrahlen von Licht durch diesen Abschnitt der geschälten Außenschicht möglich ist.

2. Vorrichtung nach Anspruch 1, **dadurch gekennzeichnet, daß** die Platte (8) aus Glasfasern ein Gehäuse (80) umfaßt, dessen Boden mit einem reflektierenden Material (81) überzogen ist und in dessen Innerem die in einer Ebene ausgebreiteten Glasfasern (90 bis 99) in einem durchscheinenden Werkstoff (83) eingebettet sind und einen Abschnitt einer geschälten Außenschicht auf der offenen Seite des Gehäuses (80) gegenüber dem reflektierenden Werkstoff (81) aufweisen.

3. Vorrichtung nach Anspruch 1 oder Anspruch 2, **dadurch gekennzeichnet, daß** die Vorrichtung (5; 50) zum Anzeigen von digitalen Bildern größere Abmessungen aufweist als der lichtempfindliche Träger (1) und **dadurch**, daß eine optische Reduktionsvorrichtung (4) zwischen der Vorrichtung (5; 50) zum Anzeigen von digitalen Bildern und der Druckstation (2, 3) angeordnet ist, in welcher sich der lichtempfindliche Träger (1) befindet.

4. Vorrichtung nach einem der Ansprüche 1 bis 3, **dadurch gekennzeichnet, daß** die warme Lichtquelle (10) einen Block (15) zur elektrischen Versorgung, eine Lampe (14) mit thermischer Strahlung, ein Kühlgebläse (16) und einen Block (19) zum Tragen von Filtern (18) mit reduzierter Größe umfaßt, der in der Nähe der Vorrichtung (13) zum Verbinden der Mittel (9) für das Anwenden des kalten Lichts angeordnet ist.

5. Vorrichtung nach einem der Ansprüche 1 bis 4, **dadurch gekennzeichnet, daß** die Druckstation ein spiegelfreies Glas (3) umfaßt, gegen das ein lichtempfindlicher Träger (1) durch eine Druckvorrichtung (2) gedrückt werden kann, die durch die elektronische Steuervorrichtung (6) gesteuert wird.

6. Vorrichtung nach einem der Ansprüche 1 bis 5, **dadurch gekennzeichnet, daß** die elektronische Steuervorrichtung (6) angepaßt ist, um das wahlweise Öffnen des Verschlusses (11) zu steuern, der zwischen der verlagerten warmen Lichtquelle (10) und den Mitteln (9) zum Anwenden des kalten Lichts angeordnet ist, die sich zwischen dem Verschluß (11) und der Vorrichtung (5) zum Anzeigen von digitalen Bildern befinden, mit einer Öffnungsdauer, die zwischen ungefähr einer Zehntelsekunde und ungefähr zehn Sekunden liegt.

7. Vorrichtung nach einem der Ansprüche 1 bis 6, **dadurch gekennzeichnet, daß** sie im Rahmen der Herstellung von Identifikationsscheinen für das Übertragen von digitalen Bildern, die in Datenbanken gespeichert werden, auf negative oder positive lichtempfindliche Träger verwendet wird.

## Claims

1. Device for projecting digital images onto a photosensitive support, comprising:
- a device (5) for displaying digital images which is devoid of any integrated light source,
- a printing station (2, 3) arranged some distance away in a relative position defined with respect to the digital image display device (5),
- a delocalized warm light source (10),
- means (9) of applying cold light comprising a bundle of optical fibres (9) and interposed between the warm light source (10) and the digital image display device (5),
- a shutter (11) interposed between the warm light source (10) and the means (9) of applying cold light, and
- an electronic control device (6) for controlling the positioning of a photosensitive support (1) in the printing station (2, 3), the displaying of a digital image on the digital image display device (5), and the selective opening of the shutter (11),
**characterized in that** the digital image display device (5) is a liquid crystal screen, **in that** the bundle (9) of optical fibres terminates on the opposite side from the light source (10) in a slab (8) of optical fibres that is superimposed on the liquid crystal screen (5) and **in that** the slab (8) of optical fibres comprises a plurality of optical fibres (90 to 99) which are spread out parallel to one another in a plane while exhibiting shut-off free ends and a portion of their outer layer peeled away so as to allow the emission of light through this portion of peeled outer layer.

2. Device according to Claim 1, **characterized in that** the slab (8) of optical fibres comprises a casing (80) the bottom of which is coated with a reflecting material (81) and inside which the optical fibres (90 to 99) spread out in a plane are embedded in a translucent material (83) while exhibiting a portion of peeled outer layer on the open side of the casing (80) opposite the reflecting material (81).

3. Device according to Claim 1 or Claim 2, **characterized in that** the digital image display device (5; 50) exhibits larger dimensions than the photosensitive support (1) and **in that** a reducer optical device (4) is interposed between the digital image display device (5; 50) and the printing station (2, 3) in which the photosensitive support (1) is positioned.

4. Device according to any one of Claims 1 to 3, **characterized in that** the warm light source (10) comprises an electrical power supply block (15), a thermal radiation lamp (14), a cooling fan (16) and a support block (19) carrying filters (18) of reduced size that is arranged in the vicinity of the device (13) for linking of the means (9) for applying cold light.

5. Device according to any one of Claims 1 to 4, **characterized in that** the printing station comprises a reflectionless glass (3) against which a photosensitive support (1) can be pressed by a presser (2) controlled by the electronic control device (6).

6. Device according to any one of Claims 1 to 5, **characterized in that** the electronic control device (6) is suitable for controlling the selective opening of the shutter (11) interposed between the delocalized warm light source (10) and the means (9) of applying cold light interposed between the shutter (11) and the digital image display device (5), with a duration of opening of between around a tenth of a second and some ten seconds.

7. Device according to any one of Claims 1 to 6, **characterized in that** it is applied to the registering of digital images, stored in databases, on negative or positive photosensitive supports within the framework of the manufacture of identification coupons.
